# EUROPÄISCHE PATENTANMELDUNG

(11) **EP 4 834 111 A1**
(43) Veröffentlichungstag der Anmeldung: **04.11.2026**
(21) Anmeldenummer: 26174612.7
(22) Anmeldetag: 24.04.2026
(51) Int. Cl.: A22B 5/16

(54) **ENTSCHWARTUNGSVORRICHTUNG UND ENTSCHWARTUNGSWALZEN-BAUGRUPPE HIERFÜR**

(30) Priorität: 02.05.2025 DE 102025116957
(71) Anmelder: Freund Maschinenfabrik GmbH & Co. KG, 33106 Paderborn (DE)
(72) Erfinder: Ewers, Christoph, 34439 Willebadessen (DE)
(74) Vertreter: Wickord, Wiro

(57) **Zusammenfassung**

Die Erfindung betrifft eine Entschwartungswalzen-Baugruppe (20) für eine Entschwartungsvorrichtung (1) umfassend eine Welle (23) und umfassend ein auf der Welle (23) aufgenommenes Schneckenrad (21) und wenigstens ein axial neben dem Schneckenrad (21) auf der Welle (23) aufgenommenes Walzenpaket (22.1, 22.2) mit einer Vielzahl an axial voneinander beabstandeten und radial kranzförmig verteilt angeordneten Zähnen (31), wobei das Walzenpaket (22.1, 22.2) mehrteilig ausgebildet ist und eine Vielzahl an jeweils einzeln und alternierend auf die Welle (23) aufgeschobenen Zahnkränzen (24) und Distanzringen (25) aufweist. Ferner betrifft die Erfindung eine Entschwartungsvorrichtung (1) mit einer Entschwartungswalzen-Baugruppe (20).

## Beschreibung

Die Erfindung betrifft eine Entschwartungswalzen-Baugruppe für eine Entschwartungsvorrichtung, insbesondere für einen Handabschwarter, umfassend eine Welle und umfassend ein auf der Welle aufgenommenes Schneckenrad und wenigstens ein axial neben dem Schneckenrad auf der Welle aufgenommenes Walzenpaket mit einer Vielzahl an axial voneinander beabstandeten und radial kranzförmig verteilt angeordneten Zähnen. Ferner betrifft die Erfindung eine Entschwartungsvorrichtung mit einer Entschwartungswalzen-Baugruppe.

Entschwartungsvorrichtungen kommen regelmäßig in einem Zerlegebetrieb für das Entschwarten, das Entvliesen, das Enthäuten und dergleichen von Fleisch oder Fisch zum Einsatz. Derartige Entschwartungsvorrichtungen können jedoch auch für das Erzeugen von dünnen Fleischstreifen oder dünnen Fleischscheiben genutzt werden, etwa dünne Scheiben oder Streifen von einem Schinken oder von einem Lachs. Diese Entschwartungsvorrichtungen und solche im Kontext der vorliegenden Erfindung können sowohl als stationäre Maschinen oder bevorzugt als Handwerkzeuge, sogenannte Handabschwarter, ausgeführt sein.

Die in aus dem Stand der Technik bekannten Entschwartungsvorrichtungen verwendeten Entschwartungswalzen-Baugruppen sehen ein als ein spanend gefertigtes Einzelteil hergestelltes Walzenpaket mit einer Vielzahl an Zähnen vor. Die Zähne sind dabei in mehreren axial voneinander beabstandeten Zahnreihen angeordnet. Meist weist eine bekannte Entschwartungswalzen-Baugruppe beziehungsweise Entschwartungswalze zwei auf einer Welle aufgeschobene Walzenpakete dieser Art auf, zwischen denen ein ebenfalls auf die Welle aufgeschobenes Schneckenrad angeordnet ist. Die spanende Fertigung der Walzenpakete ist vergleichsweise kostenintensiv und problematisch, wenn besonders genaue Fertigungstoleranzen eingehalten werden müssen. Zudem kommt häufig ein Abstreifer mit mehreren Fingern zum Einsatz, welche in die Zwischenräume zwischen den Zahnreihen eingreifen, um ein Umwickeln des Schneidguts, etwa einer Schwarte, um die Entschwartungswalze zu verhindern. Für eine gute Funktionalität, soll der Abstreifer möglichst passgenau in die Entschwartungswalze eingreifen. Dies macht es jedoch erforderlich, dass die Entschwartungswalzen-Baugruppe und der Abstreifer präzise, das heißt genaue Fertigungstoleranzen einhaltend, gefertigt werden, was wiederum diese Komponenten vergleichsweise teuer in der Fertigung macht.

Die EP 0 203 716 A2 gibt ein Beispiel für eine als Handabschwarter ausgeführte Entschwartungsvorrichtung mit einer Entschwartungswalzen-Baugruppe der vorgenannten Art an. Der Handabschwarter umfasst hier einen Abstreifer mit mehreren Fingern und eine Entschwartungswalzen-Baugruppe mit als Einzelteil spanend hergestellten Walzenpaketen.

Aufgabe der vorliegenden Erfindung ist es, eine verbesserte Entschwartungswalzen-Baugruppe für eine Entschwartungsvorrichtung beziehungsweise eine verbesserte Entschwartungsvorrichtung, insbesondere einen Handabschwarter, anzugeben, die kostengünstig fertigbar ist und eine vereinfachte Reinigung ermöglicht.

Zur Lösung der Aufgabe ist die Erfindung in Verbindung mit dem Oberbegriff des Patentanspruchs 1 dadurch gekennzeichnet, dass das Walzenpaket mehrteilig ausgebildet ist und eine Vielzahl an jeweils einzeln und alternierend auf die Welle aufgeschobenen Zahnkränzen und Distanzringen aufweist.

Alternierend bedeutet in diesem Zusammenhang, dass jeweils abwechselnd ein Zahnkranz und ein Distanzring auf die Welle aufgeschoben sind, sodass zwischen zwei benachbarten Distanzringen des Walzenpakets jeweils ein Zahnkranz beziehungsweise zwischen zwei benachbarten Zahnkränzen des Walzenpakets jeweils ein Distanzring angeordnet ist.

Der besondere Vorteil der Erfindung besteht darin, dass durch den mehrteiligen Aufbau der Entschwartungswalzen-Baugruppe zum einen dieselbe für unterschiedliche Anforderungen modular in verschiedenen Varianten ausführbar ist, zum anderen die Einzelkomponenten flexibel austauschbar sind, beispielsweise aufgrund von Verschleiß. Zudem ist durch den mehrteiligen Aufbau eine zerstörungsfreie Demontage der Entschwartungswalzen-Baugruppe ausführbar, wodurch eine vereinfachte Reinigung ermöglicht ist. Gegenüber aus dem Stand der Technik bekannten Entschwartungswalzen-Baugruppen, bei denen das wenigstens eine Walzenpaket als ein spanend gefertigtes Einzelbauteil ausgeführt ist, ermöglicht der mehrteilige Aufbau zudem eine deutlich kostengünstigere Fertigung der Entschwartungswalzen-Baugruppe. Auch die Montage der Entschwartungswalzen-Baugruppe in eine Entschwartungsvorrichtung ist vereinfacht, da Fertigungstoleranzen durch den mehrteiligen Aufbau der Entschwartungswalzen-Baugruppe kompensierbar sind. Durch eine unterschiedliche Anzahl an Zahnkränzen und Distanzringen für das Walzenpaket kann die Entschwartungswalzen-Baugruppe für Entschwartungsvorrichtungen unterschiedlicher Schnittbreiten Verwendung finden.

Nach einer bevorzugten Ausführungsform der Erfindung weisen die Distanzringe einen radial abragenden Stegabschnitt auf. Die Stegabschnitte der Vielzahl an Distanzringen des Walzenpakets der Entschwartungswalzen-Baugruppe sind vorgesehen, um bei Verwendung in einer Entschwartungsvorrichtung im Betrieb von der als Zugwalze fungierenden Entschwartungswalzen-Baugruppe eingezogenes Schneidgut abzustreifen und beugen damit einer starken Verunreinigung oder einem ungewollten zu tiefen Einzug des entschwarteten Schneidguts vor. Die Stegabschnitte bilden demzufolge einen Abstreifer beziehungsweise machen einen separaten Abstreifer überflüssig. Vorzugsweise überragen die Stegabschnitte hierfür radial die Zähne der Zahnkränze und weisen eine bevorzugte Länge von 10 mm bis 40 mm auf.

Nach einer vorteilhaften Weiterbildung der Erfindung weisen die Distanzringe eine tropfenförmige Querschnittsform auf. Die Distanzringe weisen insofern eine abgerundete beziehungsweise mit Radien versehene äußere Oberfläche auf, welche frei von Kanten ist. Bevorzugt weisen die Stegabschnitte der Distanzringe an ihrem abragenden, freien Ende eine im Querschnitt im Wesentlichen kreis- oder ovalförmige Abstreifernase auf. Die Kontur der Abstreifernase erleichtert das Abstreifen von daran entlanggeführtem Schneidgut zusätzlich.

Nach einer vorteilhaften Weiterbildung der Erfindung sind die Distanzringe jeweils mittels eines auf die Welle aufgeschobenen Gleitlagerrings in Bezug auf die Welle rotierbar gelagert. Vorteilhaft sind hierdurch die Distanzringe bei Verwendung Entschwartungswalzen-Baugruppe in einer Entschwartungsvorrichtung im Betrieb nicht zwangsweise mit den rotierend angetriebenen Zahnkränzen mitgeführt, sodass die Stegabschnitte der Distanzringe in einer definierten Position verweilen und als Abstreifer fungieren können. Auch ist durch die unabhängige Lagerung der Distanzringe gegenüber den Zahnkränzen beziehungsweise der Welle ein vorteilhaftes Verschwenken der Distanzringe einzelweise ermöglicht, beispielsweise zu Reinigungszwecken, etwa um abgetrennte beziehungsweise eingezogene Fleischfetzen zu entfernen.

Nach einer vorteilhaften Weiterbildung der Erfindung umfasst das Walzenpaket eine Vielzahl von n Zahnkränzen und eine Vielzahl von n+1 Distanzringen. Es ist insofern vorgesehen, dass das Walzenpaket insgesamt genau einen Distanzring mehr vorsieht als Zahnkränze. Anders ausgedrückt, ist jeder Zahnkranz des Walzenpakets axial zwischen zwei Distanzringen auf der Welle angeordnet. Die Zahl n entstammt insofern der Menge natürlicher Zahlen größer gleich zwei. Bevorzugt weist das Walzenpaket insgesamt fünf Zahnkränze und insgesamt sechs Distanzringe auf.

Nach einer vorteilhaften Weiterbildung der Erfindung ist die Welle als eine Keilwelle ausgeführt und die Zahnkränze weisen eine zu der Keilwelle formkorrespondierende Nabenöffnung auf derart, dass die Keilwelle und die darauf aufgeschobenen Zahnkränze eine Welle-Nabe-Verbindung bilden.

Nach einer vorteilhaften Weiterbildung der Erfindung weist die Keilwelle insgesamt sechs radial gleich verteilt angeordnete Keile auf. Die Zahnkränze weisen bevorzugt jeweils 18 radial gleich verteilt angeordnete Zähne und im Bereich der Nabenöffnung jeweils drei radial gleich verteilt angeordnete Mitnehmernasen auf.

Eine hiervon abweichende Verteilung ist unter Beibehaltung der erfinderischen Idee selbstverständlich ebenfalls möglich, wobei bevorzugte Ausführungsformen der Erfindung vorsehen, dass die Zahnkränze möglichst formkorrespondierend auf die Keilwelle aufschiebbar sind und eine Welle-Nabe-Verbindung bilden und die Zähne der Zahnkränze jeweils radial auf gleicher Höhe zueinander angeordnet sind.

Nach einer vorteilhaften Weiterbildung der Erfindung ist die Welle als eine Hohlwelle mit einem zylindrischen Wellenhohlraum ausgeführt, wobei die Welle axial stirnseitig zwischen zwei jeweils in den zylindrischen Wellenhohlraum eingreifende Anlaufbuchsen rotierbar gelagert ist. Die Anlaufbuchsen fungieren bei Verwendung der Entschwartungswalzen-Baugruppe in einer Entschwartungsvorrichtung als Gleitlager und sind hierfür bevorzugt aus einem geeigneten, aus dem Stand der Technik bekannten Gleitlagermaterial, insbesondere aus einem Gleitlagerkunststoff, hergestellt.

Nach einer vorteilhaften Weiterbildung der Erfindung sind zwei analog ausgeführte Walzenpakete umfasst, wobei das Schneckenrad und die Walzenpakete derart auf die Welle aufgeschoben sind, dass das Schneckenrad axial zwischen den Walzenpaketen angeordnet ist.

Nach einer vorteilhaften Weiterbildung der Erfindung sind zum einen die Zahnkränze und zum anderen die Distanzringe jeweils als Gleichteile hergestellt. Insofern können diese Komponenten in hoher Stückzahl und damit besonders kostengünstig gefertigt werden.

Nach einer vorteilhaften Weiterbildung der Erfindung sind die Zahnkränze und die Distanzringe als lasergeschnittene Blechteile und bevorzugt aus Federstahl hergestellt. Erst der erfindungsgemäß vorgeschlagene modulare beziehungsweise mehrteilige Aufbau der Entschwartungswalzen-Baugruppe ermöglicht den Einsatz von besonders vorteilhaften Fertigungsverfahren, wie dem Laserblechschneiden. Die Komponenten sind damit kostengünstig und mit hoher Präzision beziehungsweise geringen Fertigungstoleranzen herstellbar. Federstahl ist ein besonders vorteilhaftes Material, da die daraus hergestellten Komponenten aufgrund der hohen Elastizität, Festigkeit und Dauerschwingfestigkeit von Federstahl besonders starken Belastungen standhalten können und somit verschleißarm sind.

Zur Lösung der Aufgabe weist die Erfindung die Merkmale des nebengeordneten Patentanspruchs 12 auf. Demzufolge umfasst eine erfindungsgemäße Entschwartungsvorrichtung eine erfindungsgemäße Entschwartungswalzen-Baugruppe, welche motorangetrieben in einem Gehäuse um eine Walzenachse rotierend gehalten ist, weiter umfassend ein in einer Arbeitsstellung mit einem Freispalt parallel zur Walzenachse an dem Gehäuse gehaltenes Messer, wobei radial abragende Stegabschnitte von Distanzringen der Entschwartungswalzen-Baugruppe in der Arbeitsstellung an das Gehäuse angelegt sind und einen Abstreifer zum Abstreifen von im Betrieb eingezogenem Schneidgut bilden.

Die Entschwartungsvorrichtung ist gemäß einer besonders vorteilhaften Ausführungsform der Erfindung als ein Handabschwarter beziehungsweise Handwerkzeug ausgeführt. Nach einer alternativen Ausführungsform der Erfindung ist die Entschwartungsvorrichtung als eine stationäre, nicht als ein Handwerkzeug ausgeführte Entschwartungsmaschine ausgeführt.

Die erfindungsgemäße Entschwartungsvorrichtung weist den besonderen Vorteil auf, dass sie leicht zu reinigen und kostengünstig herzustellen ist. Dadurch, dass die Distanzringe aufgrund ihrer radial abragenden Stegabschnitte gleichzeitig als Abstreifer fungieren, kann auf einen separaten Abstreifer verzichtet werden und das wenigstens eine Walzenpaket der Entschwartungswalzen-Baugruppe bleibt im Wesentlichen frei von mitgezogenen Fleischfetzen oder dergleichen. Zudem ermöglicht der modulare beziehungsweise mehrteilige Aufbau der Entschwartungswalzen-Baugruppe eine Demontage zu Reinigungszwecken oder den Austausch verschlissener Komponenten.

Nach einer vorteilhaften Weiterbildung der Erfindung ist der Freispalt einstellbar, indem das Messer in einem zwischen zwei Messerschenkeln des Gehäuses gehaltenen Messerhalter aufgenommen ist und die Messerschenkel jeweils eine Verstellöffnung aufweisen, durch die jeweils eine lösbare und in den Messerhalter eingreifende Verstellschraube geführt ist, derart, dass zum Verstellen des Freispalts die Verstellschrauben lösbar und hierdurch der Messerhalter entlang der Verstellöffnungen verschiebbar und/oder rotierbar ist. Vorteilhaft ist insofern eine Verstellung einer Schnitttiefe beziehungsweise eines Schnittwinkels, mit welchem das Messer in das Schneidgut eingreift, ermöglicht.

Nach einer vorteilhaften Weiterbildung der Erfindung ist das Gehäuse mehrteilig ausgebildet und umfasst einen bügelförmigen Grundkörper mit zwei die Entschwartungswalzen-Baugruppe stirnseitig umgreifenden Schenkeln, wobei die Messerschenkel um eine parallel und bevorzugt koaxial zur Walzenachse orientierte Drehachse aus der Arbeitsstellung in eine Messerwechselstellung und zurück verschwenkbar an den Schenkeln des Grundkörpers gehalten sind.

Nach einer vorteilhaften Weiterbildung der Erfindung ist zwischen den Schenkeln des Grundkörpers ein parallel zur Walzenachse orientierter, federbelasteter Rastbolzen gehalten. Der Rastbolzen ist aus einer Arretierstellung, in welcher die Messerschenkel in der Arbeitsstellung gehalten sind, verbringbar in eine Freigabestellung, in welcher die Messerschenkel in die Messerwechselstellung verschwenkbar sind. Ferner ist der Rastbolzen aus der Freigabestellung zurück verbringbar in die Arretierstellung. Durch den Rastbolzen ist vorteilhaft ein werkzeugloser Messerwechsel mit wenigen Handgriffen ermöglicht.

Nach einer vorteilhaften Weiterbildung der Erfindung ist der Rastbolzen durch in den Schenkeln vorgesehenen Führungsöffnungen jeweils endseitig hindurchragend geführt, wobei in der Arretierstellung der Rastbolzen in einer ersten Aufnahmetasche der Führungsöffnungen aufgenommen ist und die Messerschenkel daran angelegt sind und wobei in der Freigabestellung der Rastbolzen soweit radial beabstandet zu den Messerschenkeln positioniert ist, dass die Messerschenkel aus der Arbeitsstellung in die Messerwechselstellung verschwenkbar sind. Insofern hält der Rastbolzen zusammen mit dem Grundkörper des Gehäuses die Messerschenkel in einer stabilen Arretierstellung, sodass ein Betrieb der Entschwartungsvorrichtung mit einer gleichbleibenden, konstanten Schnitttiefe beziehungsweise ein konstanter Freispalt realisiert ist.

Nach einer vorteilhaften Weiterbildung der Erfindung weisen die Führungsöffnungen jeweils eine zu der ersten Aufnahmetasche beabstandete zweite Aufnahmetasche auf, in welcher der Rastbolzen in der Freigabestellung aufnehmbar ist. Zwischen der ersten Aufnahmetasche und der zweiten Aufnahmetasche der Führungsöffnungen ist bevorzugt ein Führungsvorsprung gebildet. Vorzugsweise ist der Rastbolzen in der Arretierstellung in der ersten Aufnahmetasche aufgenommen und in der Freigabestellung in der zweiten Aufnahmetasche aufgenommen. Durch den Führungsvorsprung ist dabei ermöglicht, dass der Rastbolzen nicht ohne weiteres Zutun aus den Aufnahmetaschen herausbewegt ist, also in den Aufnahmetaschen verweilt.

Nach einer vorteilhaften Weiterbildung der Erfindung ist der Rastbolzen über wenigstens eine Torsionsfeder federbelastet. Die Torsionsfeder bringt eine Federkraft auf, welche den Rastbolzen in der Arretierstellung in den ersten Aufnahmetaschen und in der Freigabestellung in den zweiten Aufnahmetaschen der Führungsöffnungen als bevorzugte Ruhestellungen beziehungsweise Vorzugsstellungen hält. Zum Verbringen des Rastbolzens aus der Arretierstellung in die Freigabestellung oder zurück ist von einem Bediener eine der Federkraft entgegengerichtete Handkraft aufzubringen, wobei zur dabei erforderlichen Überwindung des Führungsvorsprungs der Rastbolzen wenigstens eine Durchgangsöffnung aufweist, in der ein Federschenkel der wenigstens einen Torsionsfeder längsverschiebbar geführt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Entschwartungsvorrichtung gelten selbstverständlich auch im Zusammenhang mit der erfindungsgemäßen Entschwartungswalzen-Baugruppe und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter. Es zeigen:
- Fig. 1: ein Ausführungsbeispiel einer erfindungsgemäßen Entschwartungsvorrichtung in einer Arbeitsstellung in einer perspektivischen Vorderansicht von oben,
- Fig. 2: die erfindungsgemäße Entschwartungsvorrichtung nach Fig. 1 in der Arbeitsstellung in einer perspektivischen Vorderansicht von unten,
- Fig. 3: die erfindungsgemäße Entschwartungsvorrichtung nach Fig. 1 in der Arbeitsstellung in einer perspektivischen Rückansicht von oben,
- Fig. 4: die erfindungsgemäße Entschwartungsvorrichtung nach Fig. 1 in der Arbeitsstellung in einer perspektivischen Rückansicht von unten,
- Fig. 5: die erfindungsgemäße Entschwartungsvorrichtung nach Fig. 1 in der Arbeitsstellung in einer Draufsicht mit eingezeichneter Schnittlinie A-A,
- Fig. 6: die erfindungsgemäße Entschwartungsvorrichtung nach Fig. 1 in der Arbeitsstellung in einer Schnittansicht entlang der Schnittlinie A-A gemäß Fig. 5,
- Fig. 7: die erfindungsgemäße Entschwartungsvorrichtung nach Fig. 1 in der Arbeitsstellung in einer Seitenansicht mit eingezeichneter Schnittlinie B-B,
- Fig. 8: die erfindungsgemäße Entschwartungsvorrichtung nach Fig. 1 in der Arbeitsstellung in einer Schnittansicht entlang der Schnittlinie B-B gemäß Fig. 7,
- Fig. 9: die erfindungsgemäße Entschwartungsvorrichtung nach Fig. 1 in der Arbeitsstellung in einer Vorderansicht,
- Fig. 10: die erfindungsgemäße Entschwartungsvorrichtung nach Fig. 1 in einer Messerwechselstellung in einer perspektivischen Vorderansicht von oben,
- Fig. 11: die erfindungsgemäße Entschwartungsvorrichtung nach Fig. 1 in der Messerwechselstellung in einer perspektivischen Rückansicht von unten,
- Fig. 12: die erfindungsgemäße Entschwartungsvorrichtung nach Fig. 1 in einer ersten Reinigungsstellung in einer perspektivischen Vorderansicht von unten,
- Fig. 13: die erfindungsgemäße Entschwartungsvorrichtung nach Fig. 1 in einer zweiten Reinigungsstellung in einer perspektivischen Rückansicht von unten,
- Fig. 14: eine erfindungsgemäße Entschwartungswalzen-Baugruppe für die Entschwartungsvorrichtung nach Fig. 1 in einer Explosionsansicht,
- Fig. 15: die erfindungsgemäße Entschwartungswalzen-Baugruppe nach Fig. 14 in einer perspektivischen Ansicht,
- Fig. 16: die erfindungsgemäße Entschwartungswalzen-Baugruppe nach Fig. 14 im Vollschnitt,
- Fig. 17: einen Zahnkranz der erfindungsgemäßen Entschwartungswalzen-Baugruppe nach Fig. 14 in einer perspektivischen Einzelansicht und
- Fig. 18: einen Distanzring der erfindungsgemäßen Entschwartungswalzen-Baugruppe nach Fig. 14 in einer perspektivischen Einzelansicht.

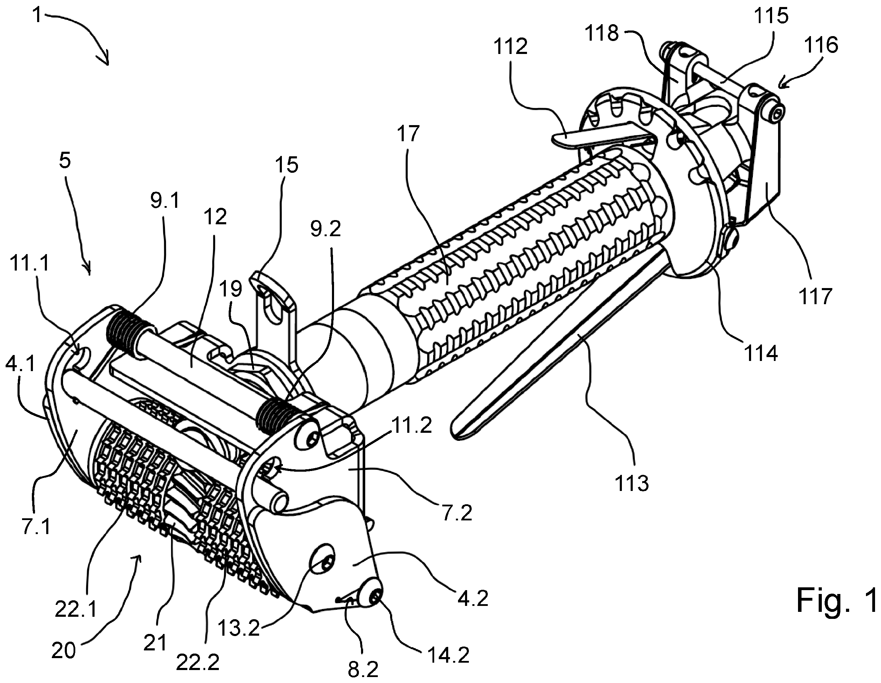

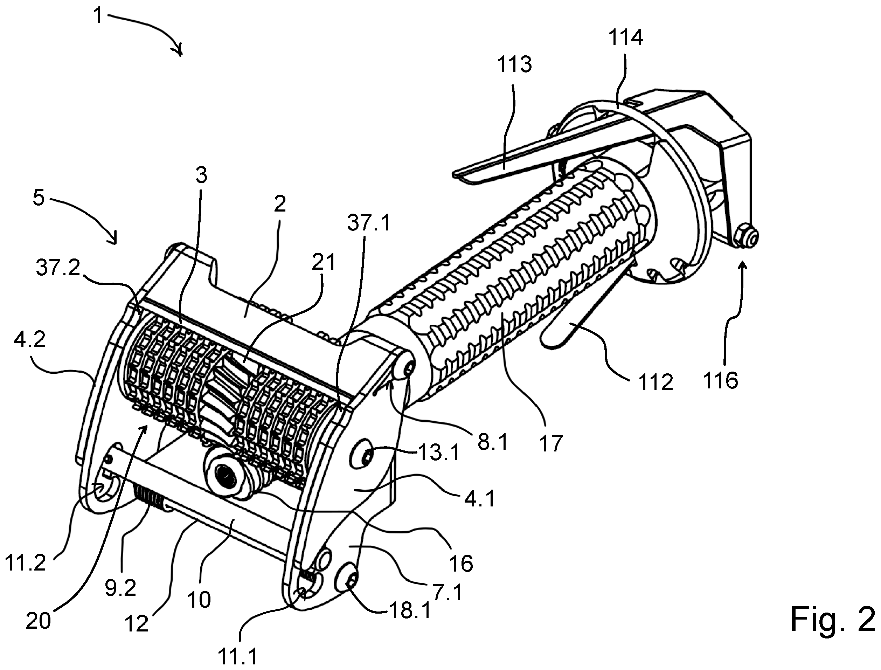

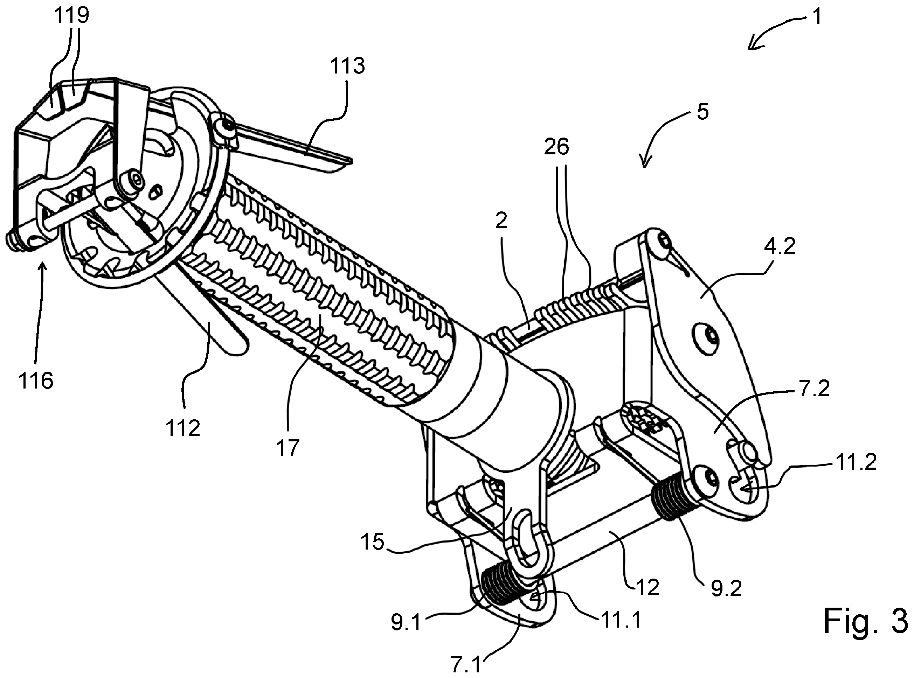

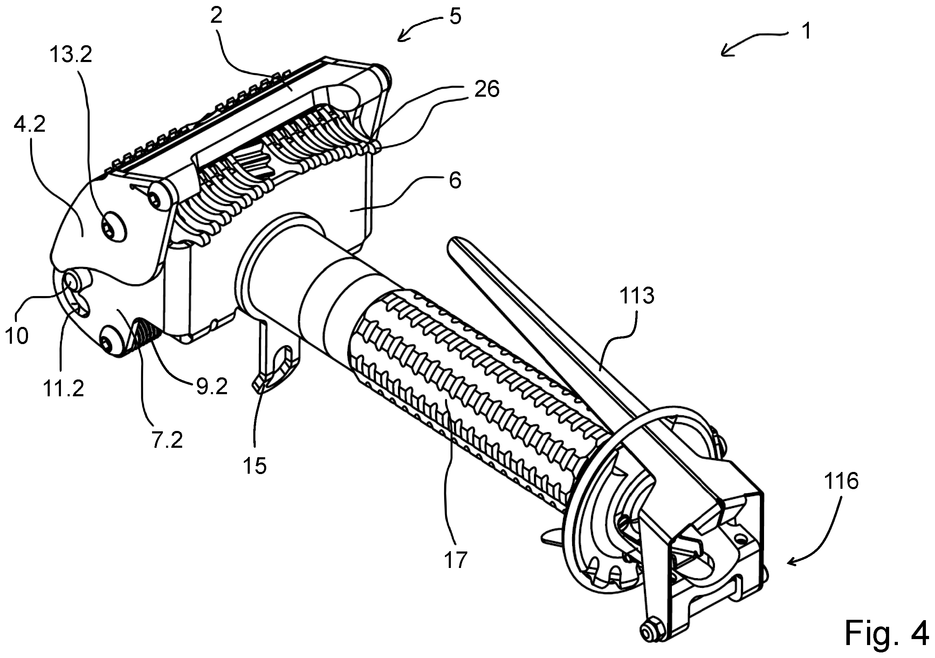

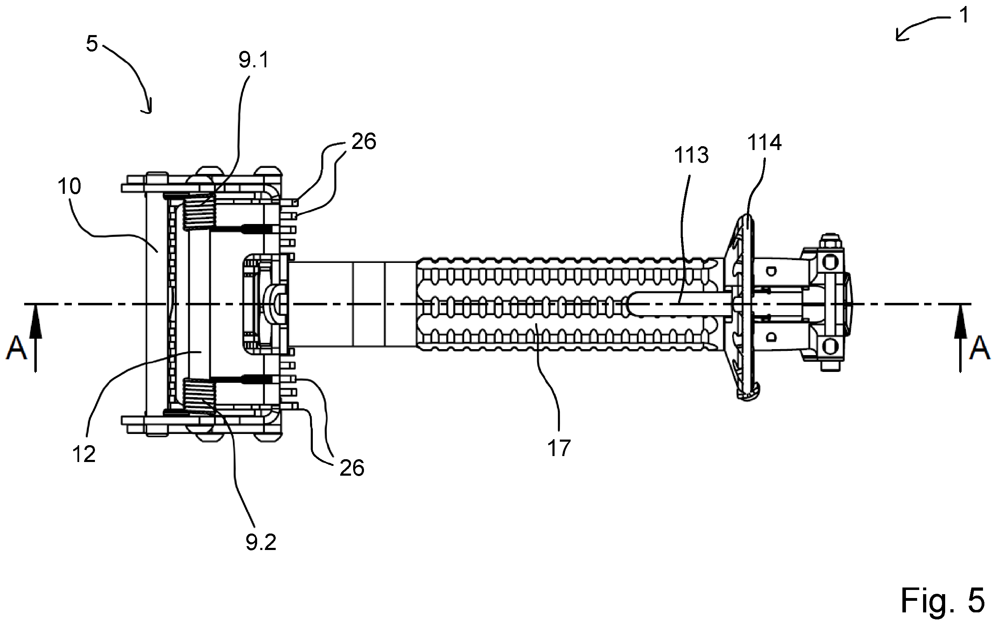

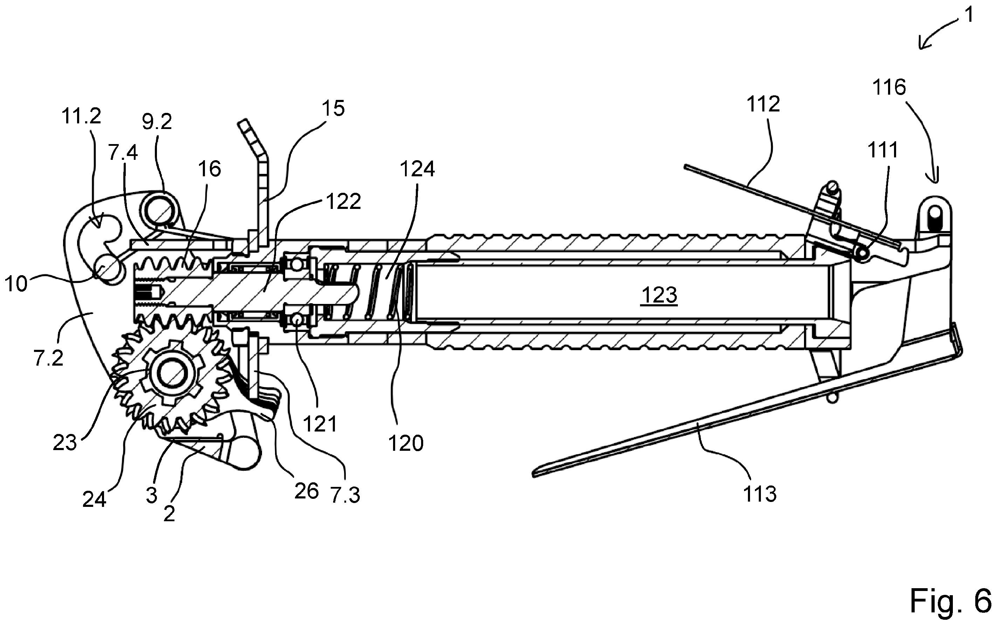

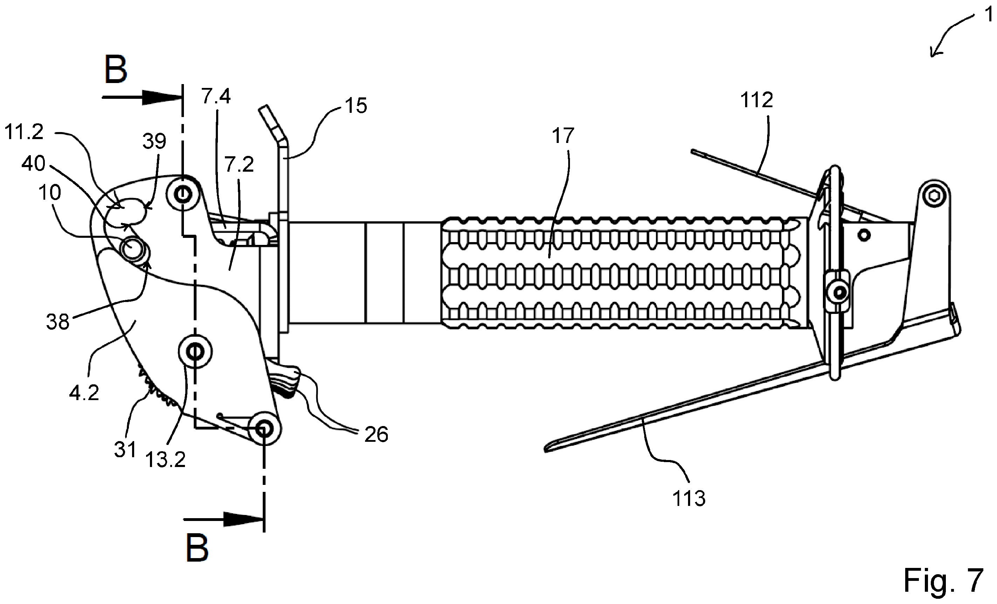

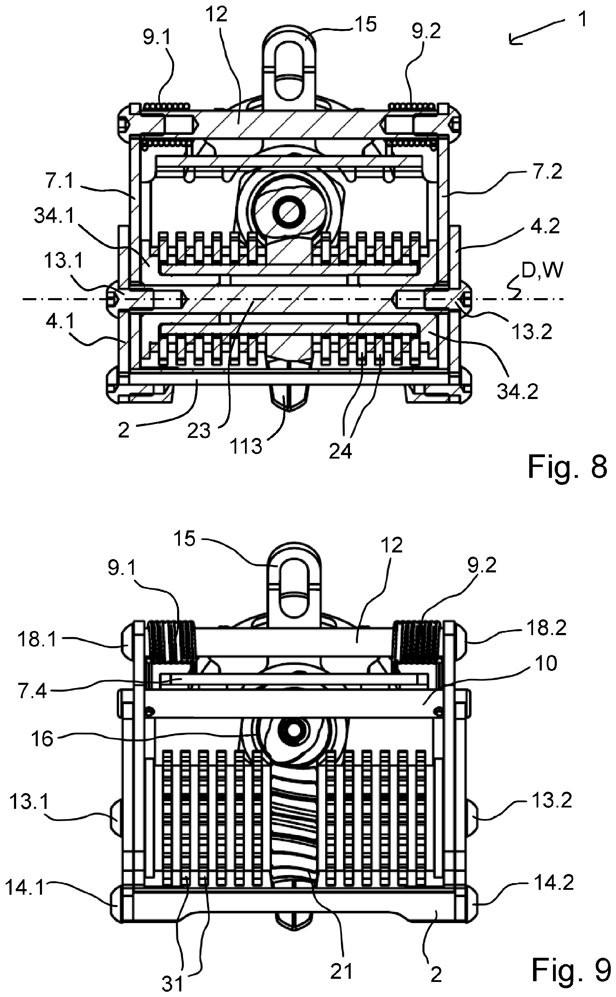

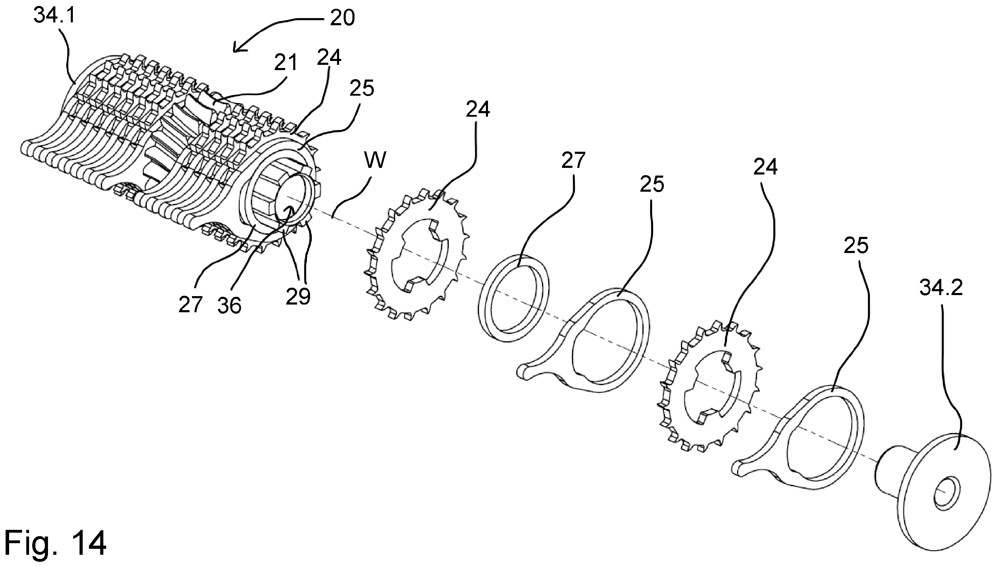

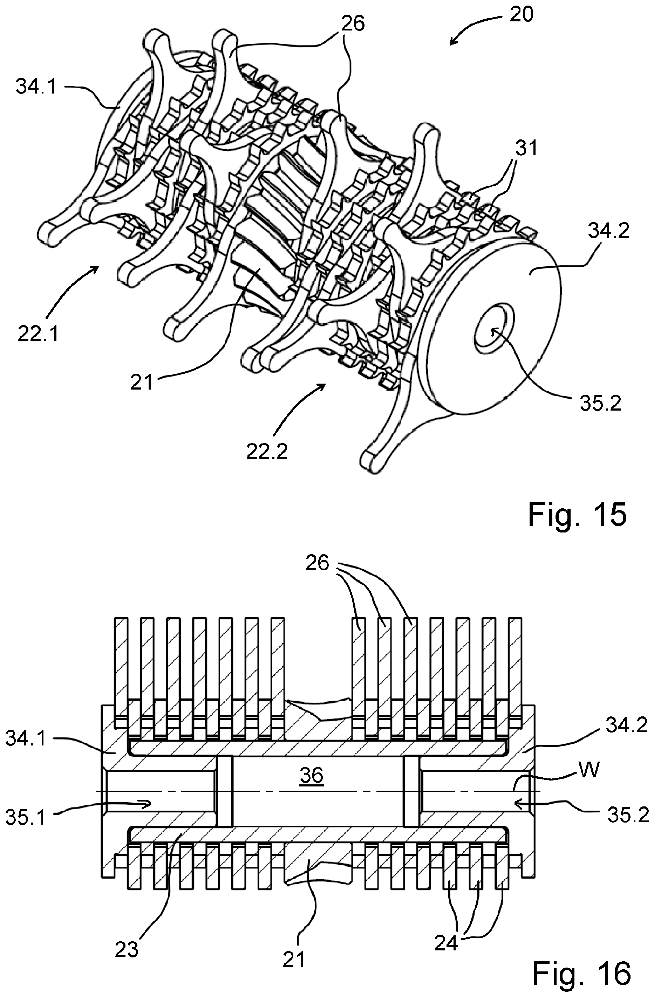

Die Fig. 1 bis Fig. 13 geben ein vorteilhaftes Ausführungsbeispiel für eine hier als ein Handabschwarter beziehungsweise Handwerkzeug ausgeführte erfindungsgemäße Entschwartungsvorrichtung 1 mit einer erfindungsgemäßen Entschwartungswalzen-Baugruppe 20 an. Die Fig. 1 bis Fig. 13 zeigen die erfindungsgemäße Entschwartungsvorrichtung 1 in verschiedenen Ansichten und Stellungen. Die Fig. 14 bis Fig. 18 zeigen die erfindungsgemäßen Entschwartungswalzen-Baugruppe 20 und deren Komponenten in verschiedenen Ansichten.

Die Entschwartungsvorrichtung 1 nach Fig. 1 weist ein Gehäuse 5 auf, in welchem eine um eine Walzenachse W rotierbar gelagerte Entschwartungswalzen-Baugruppe 20 und ein Messer 3 aufgenommen sind. Die Entschwartungswalzen-Baugruppe 20 bildet eine Zahnwalze beziehungsweise Zugwalze, welche im Betrieb rotierend angetrieben ist und dazu dient, zu bearbeitendes Schneidgut, insbesondere zu enthäutende oder zu entschwartende Fleischstücke, einzuziehen und dabei entlang des Messers 3 herzuführen. Die Entschwartungswalzen-Baugruppe 20 weist hierfür eine Vielzahl an Zähnen 31 auf, die sich im Betrieb in das Schneidgut einhaken und dieses damit in Richtung des Messers 3 in die Entschwartungsvorrichtung 1 einziehen.

Das Gehäuse 5 der Entschwartungsvorrichtung 1 ist mehrteilig ausgeführt und weist einen im Wesentlichen bügelförmigen Grundkörper 6 mit zwei durch einen Verbindungsabschnitt 7.3 verbundenen Schenkel 7.1, 7.2 auf, welche die Entschwartungswalzen-Baugruppe 20 stirnseitig umgreifen und zwischen denen die Entschwartungswalzen-Baugruppe 20 rotierend gelagert ist. Das Gehäuse 5 ist zu einer dem Verbindungsabschnitt 7.3 gegenüberliegenden Vorderseite hin offen ausgeführt, sodass im Betrieb die Zähne 31 der rotierend angetriebenen Entschwartungswalzen-Baugruppe 20 in das Schneidgut eingreifen können.

Das Gehäuse 5 sieht ferner zwei Messerschenkel 4.1, 4.2 vor, die außenseitig, das heißt an einer der Entschwartungswalzen-Baugruppe 20 gegenüberliegenden Außenseite, an die Schenkel 7.1, 7.2 des Grundkörpers 6 über Gelenkschrauben 13.1, 13.2 angelenkt sind. Die Gelenkschrauben 13.1, 13.2 bilden hier ein Drehgelenklager für ein Verschwenken der Messerschenkel 4.1, 4.2 gegenüber den Schenkeln 7.1, 7.2 des Grundkörpers 6 um eine Drehachse D und zugleich ist darüber die Entschwartungswalzen-Baugruppe 20 an den Schenkeln 7.1, 7.2 angelenkt. Die Drehachse D und die Walzenachse W sind hier insofern koaxial zueinander beziehungsweise stimmen überein.

Zwischen den Messerschenkeln 4.1, 4.2 ist ein Messerhalter 2 verstellbar gehalten, in welchem das Messer 3 entnehmbar aufgenommen ist. Zur Verstellbarkeit des Messerhalters 2 ist in den Messerschenkeln 4.1, 4.2 jeweils eine Verstellöffnung 8.1, 8.2 vorgesehen, durch die jeweils eine in den Messerhalter 2 eingreifende Verstellschraube 14.1, 14.2 hindurchgeführt ist. Durch ein Lösen der Verstellschrauben 14.1, 14.2 ist der Messerhalter 2 entlang der Verstellöffnungen 8.1, 8.2 verschiebbar beziehungsweise rotierbar, wodurch eine Schnitttiefe des Messers 3 beziehungsweise ein Freispalt zwischen den Zähnen 31 der Entschwartungswalzen-Baugruppe 20 und dem Messer 3 einstellbar ist. Die Verstellöffnungen 8.1, 8.2 weisen hier eine im Wesentlichen dreieckige Form auf.

Rückseitig, das heißt an einer der Entschwartungswalzen-Baugruppe 20 gegenüberliegenden Rückseite des Verbindungsabschnitts 7.3 des Grundkörpers 6, schließt sich an das Gehäuse 5 ein senkrecht zur der Walzenachse W orientierter, längserstreckter Handgriff 17 an. Der Handgriff 17 ist über eine Gegenmutter 19 an dem Gehäuse 5 befestigt. Zudem ist an dem Handgriff 17 eine Aufhängung 15 gehalten, über welche die Entschwartungsvorrichtung 1 über eine die Gewichtskraft kompensierende beziehungsweise reduzierende Seilzugaufhängung oder dergleichen aufgehängt werden kann, wodurch ein Bediener physisch entlastet wird. Die Aufhängung 15 ist als ein auf den Handgriff 17 aufschiebbares Blechbauteil mit einer Langlochöffnung ausgeführt und ragt nach oben hin, das heißt in Bezug auf den Handgriff 17 zu einer dem Messer 3 gegenüberliegenden Seite, radial von dem Handgriff 17 ab.

Der Handgriff 17 ist als ein im Wesentlichen zylindrischer Hohlkörper mit einem Handgriffhohlraum 123 ausgeführt. Rückseitig, das heißt an einer dem Gehäuse 5 gegenüberliegenden Stirnseite, weist der Handgriff 17 eine Stirnöffnung auf, über die eine figürlich nicht dargestellte flexible Antriebswelle eines Antriebsstrangs in den Handgriffhohlraum 123 einführbar ist.

Der Handgriff 17 weist ferner an seinem Rückseitigen Ende eine Einhand-Sicherheitsbedienabschaltung mit einem Sicherungshebel 112 und mit einem Bedienhebel 113 auf. Der Sicherungshebel 112 ist über eine Sicherungsfeder 111 federbelastet an einer in Bezug auf den Handgriff 17 gegenüberliegenden Seite zu dem Bedienhebel 113 an dem Handgriff 17 angelenkt und dient dazu, einen ungewollten Antrieb der Entschwartungswalzen-Baugruppe 20 beziehungsweise ein ungewolltes Einkuppeln der Antriebswelle mit einem in dem Gehäuse 5 vorgesehenen Schneckengetriebe zu verhindern. Zur Inbetriebnahme der Entschwartungsvorrichtung 1 ist insofern der Sicherungshebel 112 zwingend zu betätigen und hierfür von dem Bediener entgegen einer von der Sicherungsfeder 111 aufgebrachten Federkraft einzuschwenken. Ein Anschlagelement 114 stellt eine Begrenzung für einen Verschwenkweg des Sicherungshebels 112 und des Bedienhebels 113 dar, sodass beide Hebel 112, 113 von einem Bediener einhändig zusammen umgriffen werden können.

Über Betätigung des Bedienhebels 113 ist die Antriebswelle axial in eine Kupplungsposition hinein verschiebbar, in welcher die Antriebswelle in eine zwischen dem Handgriff 17 und dem Gehäuse 5 angeordnete Kupplung formschlüssig eingreift.

Dabei ist vom Bediener der Bedienhebel 113 entgegen einer in dem Handgriffhohlraum 123 aufgenommenen Kupplungsfeder 120 an den Handgriff 17 anzulenken.

Die Kupplung ist mehrteilig ausgeführt und umfasst eine Kupplungshülse 124, um welche die als Spiralfeder ausgeführte Kupplungsfeder 120 gewunden ist, und einen mit der Kupplungshülse 124 formschlüssig in Eingriff stehenden Kupplungszapfen 122. Der Kupplungszapfen 122 ist über ein Lager 121 rotierbar in dem Handgriff 117 gelagert und steht mit einer Antriebsschnecke 16 formschlüssig in Eingriff, welche wiederum formschlüssig in ein Schneckenrad 21 der Entschwartungswalzen-Baugruppe 20 eingreift und dieses im Betrieb antreibt.

Die Entschwartungsvorrichtung 1 nach Fig. 1 umfasst des Weiteren eine Hebelführung 116 für den Bedienhebel 113, worüber die Antriebswelle wahlweise gegen ein unbeabsichtigtes Lösen von dem Handgriff 17 gesichert beziehungsweise zur vollständigen Entnahme beziehungsweise zum Lösen von dem Handgriff 17 freigelegt werden kann. Die Hebelführung 116 weist eine am Handgriff 117 gehaltene Halterung 118 mit Langlöchern auf, in denen eine Gelenkschraube 115 aufgenommen ist. Der Bedienhebel 113 ist über zwei Haltearme 117 an der Gelenkschraube 115 angelenkt. Auf diese Weise ist für den Bedienhebel 113 ein Drehgelenk gebildet. Der Bedienhebel 113 weist zudem zwei Arretiernasen 119 auf, die beim Anlegen des Bedienhebels 113 mit einem Mitnehmer der Antriebswelle in Eingriff verbringbar sind und dabei die Antriebswelle axial in den Handgriffhohlraum 123 in Richtung der Kupplung einschieben.

Die Fig. 1 bis Fig. 9 zeigen die Entschwartungsvorrichtung 1 jeweils in einer Arbeitsstellung, welche eine Vorzugsstellung für den Betrieb darstellt, und in welcher das Messer 3 der Vorderseite zugewandt ist und der Messerhalter 2 eine Art Bodenplatte für das Gehäuse 5 bildet. Die Aufnahme des Messers 3 in dem Messerhalter 2 erfolgt dabei verliersicher, indem das Messer 3 auf den Schenkeln 7.1, 7.2 des Grundkörpers 6 aufliegt und durch in den Schenkeln 7.1, 7.2 vorgesehene Haltenasen 37.1, 37.2 positionsgesichert ist. Die Messerschenkel 4.1, 4.2 sind dabei über einen in Führungsöffnungen 11.1, 11.2 der Schenkel 7.1, 7.2 geführten Rastbolzen 10 gegen ein Verschwenken gesichert, wobei der Rastbolzen 10 und der Grundkörper 7 des Gehäuses 5 als Anschlagelemente dienen. Im Betrieb ist damit für eine konstante Schnitttiefe des Messers 3 beziehungsweise für einen konstanten Freispalt gesorgt.

Der Rastbolzen 10 ist dabei über zwei Torsions- beziehungsweise Schenkelfedern 9.1, 9.2 federbelastet in einer Arretierstellung als Ruhestellung gehalten. Die Schenkelfedern 9.1, 9.2 sind auf einem zwischen den Schenkeln 7.1, 7.2 über Halteschrauben 18.1, 18.2 gehaltenen Federbolzen 12 aufgenommen, wobei ein Federschenkel der Schenkelfedern 9.1, 9.2 jeweils in eine Ausnehmung eines Deckabschnitts 7.4 des Grundkörpers 6 und ein weiterer Federschenkel der Schenkelfedern 9.1, 9.2 jeweils längsverschiebbar in eine Durchgangsbohrung des Rastbolzens 10 aufgenommen sind. Der Rastbolzen 10 und der Federbolzen 12 sind jeweils parallel zu der Walzenachse W orientiert.

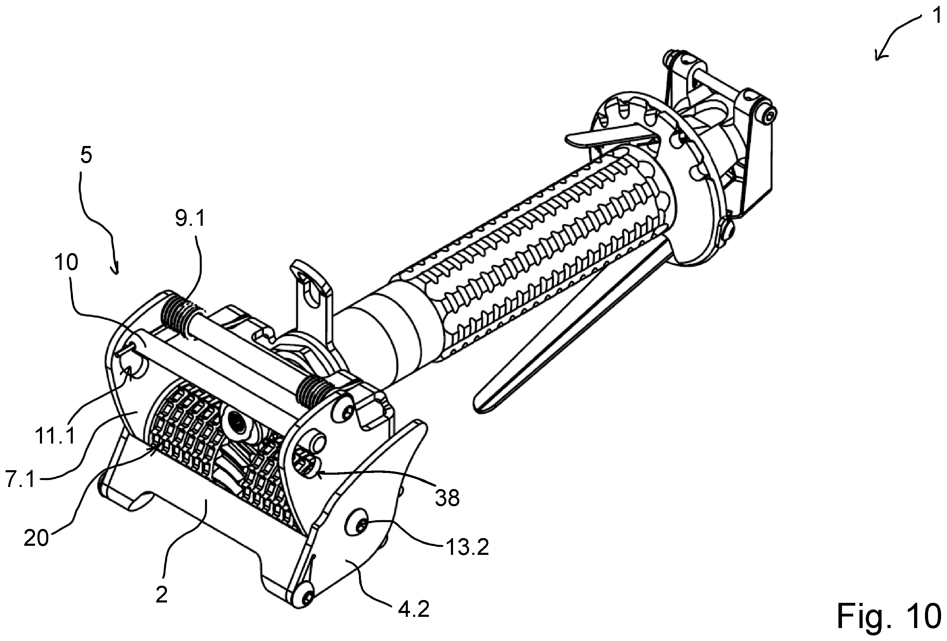

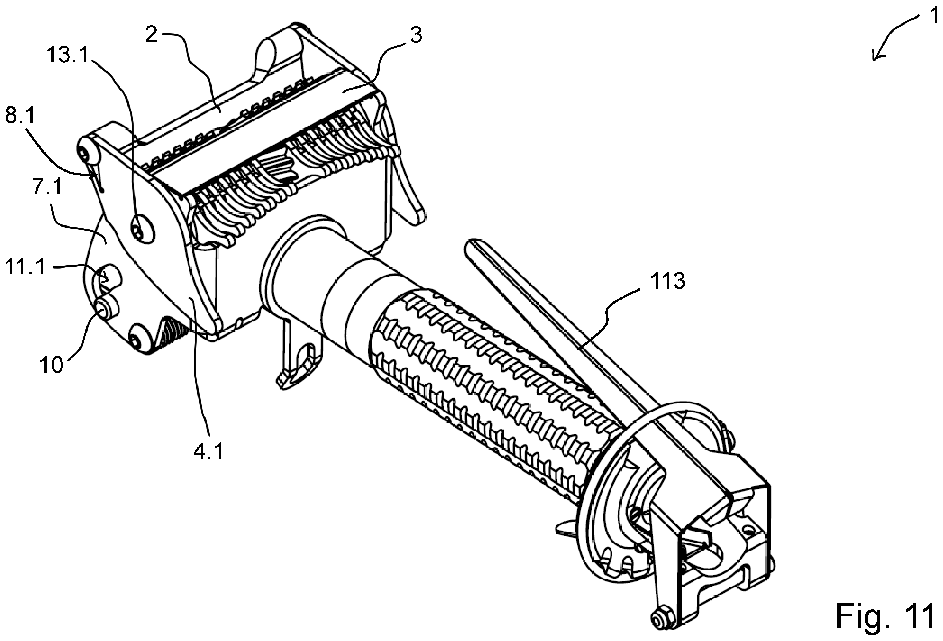

Um das Messer 3 etwa aufgrund von Verschleiß auszuwechseln, ist die Entschwartungsvorrichtung 1 aus der Arbeitsstellung in eine in den Fig. 10 und Fig. **11** dargestellte Messerwechselstellung zu verbringen, was ein Verschwenken der Messerschenkel 4.1, 4.2 und des dazwischen gehaltenen Messerhalters 3 erfordert. Hierfür ist vorgesehen, dass der Rastbolzen 10 entlang der Führungsöffnungen 11.1, 11.2 aus der Arretierstellung heraus verschiebbar ist in eine Freigabestellung auf eine Position, die außerhalb eines Schwenkbereichs der Messerschenkel 4.1, 4.2 liegt und eine Kollision der Messerschenkel 4.1, 4.2 mit dem Rastbolzen 10 verhindert. Die Führungsöffnungen 11.1, 11.2 weisen jeweils zwei voneinander beabstandete Aufnahmetaschen 38, 39 auf, zwischen denen ein Führungsvorsprung 40 gebildet ist. In der Arretierstellung verweilt der Rastbolzen 10 in den ersten Aufnahmetaschen 38 der Führungsöffnungen 11.1, 11.2, wobei die Schenkelfedern 9.1, 9.2 den Rastbolzen 10 dabei in die ersten Aufnahmetaschen 38 eindrücken. Zum Verbringen des Rastbolzens 10 aus der Arretierstellung heraus in die Freigabestellung, ist insofern von einem Bediener eine der Federkraft der Schenkelfedern 9.1, 9.2 entgegenwirkende Handkraft aufzubringen.

Damit der Rastbolzen 10 bei einem Loslassen durch den Bediener nicht durch die Federkraft in die ersten Aufnahmetaschen 38 zurückschnappt, sind die Führungsvorsprünge 40 vorgesehen, nach deren Überwinden der Rastbolzen 10 in den zweiten Aufnahmetaschen 39 verweilt. Der Rastbolzen 10 ist dabei durch die Schenkelfedern 9.1, 9.2 in die zweiten Aufnahmetaschen 39 hineingedrückt. Die Schenkelfedern 9.1, 9.2 im Zusammenspiel mit den Führungsvorsprüngen 40 halten den Rastbolzen 10 jeweils in den ersten Aufnahmetaschen 38 beziehungsweise in den zweiten Aufnahmetaschen 39.

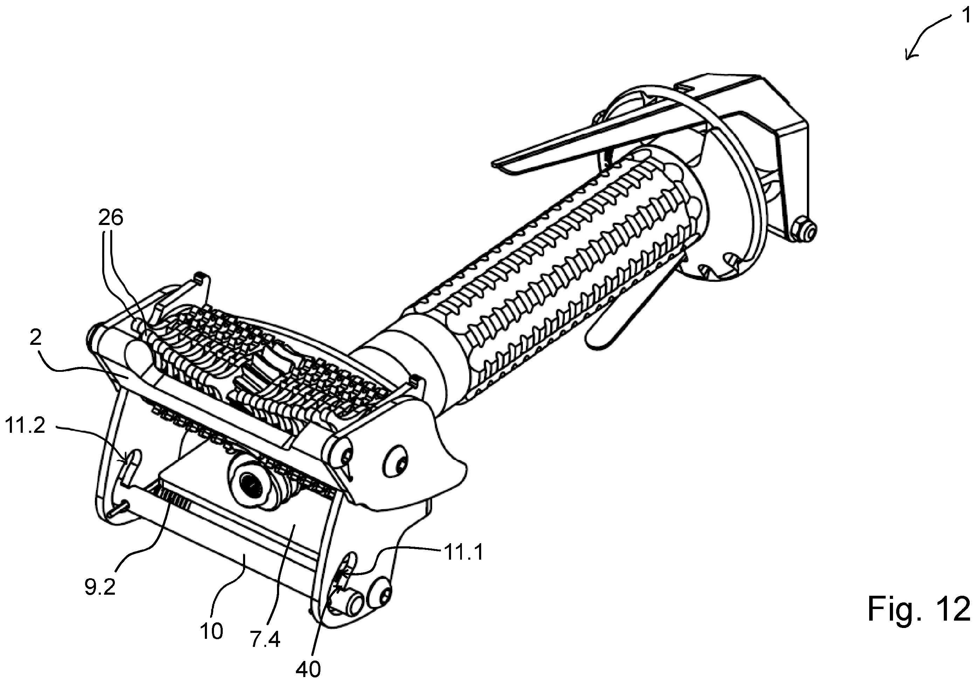

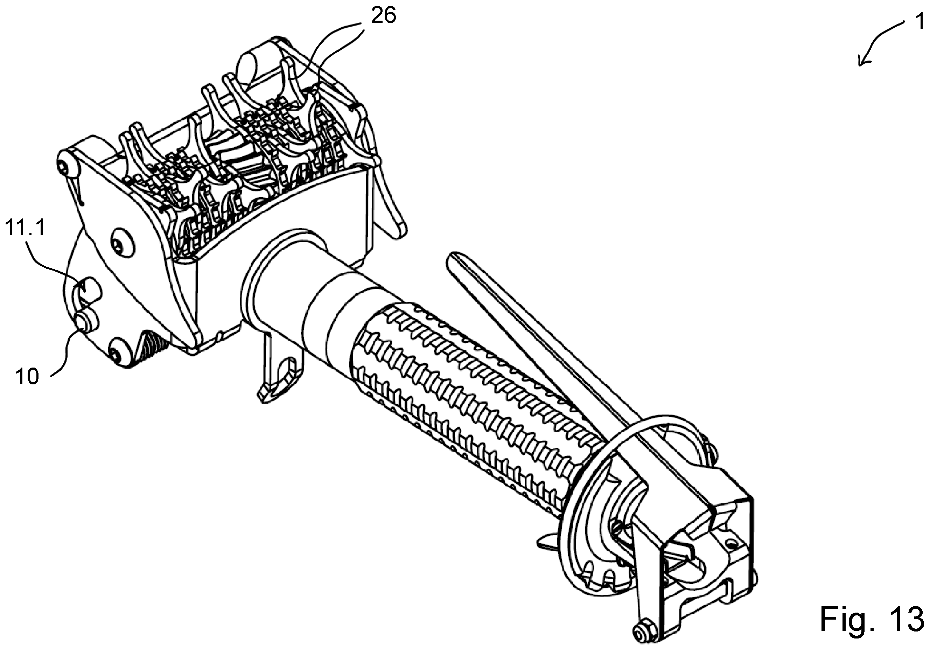

Die Fig. 12 und Fig. 13 zeigen die Entschwartungsvorrichtung 1 in einer Reinigungsstellung. Die Messerschenkel 4.1, 4.2 sind dabei analog verschwenkt wie in der Messerwechselstellung. Das freigelegte Messer 3 ist dabei entnommen. In einer ersten Reinigungsstellung nach Fig. 12 sind radial abragende Stegabschnitte 26 von Distanzringen 25 der Entschwartungswalzen-Baugruppe 20 jeweils an den Messerhalter 2 angelegt und im Wesentlichen radial auf gleicher Höhe gehalten. In einer zweiten Reinigungsstellung nach Fig. 13 sind die Stegabschnitte 26 teilweise radial verschwenkt und auf unterschiedlicher radialer Höhe zueinander gehalten. Die Distanzringe 25 der Entschwartungswalzen-Baugruppe 20 sind insofern radial verschwenkbar beziehungsweise rotierbar gelagert. Hierdurch sind Verunreinigungen wie etwa mitgerissene Fleischfetzen für eine vereinfachte Reinigung freilegbar.

Einzelansichten der erfindungsgemäßen Entschwartungswalzen-Baugruppe 20 geben die Fig. 14 bis Fig. 16 an. Die Entschwartungswalzen-Baugruppe 20 ist mehrteilig beziehungsweise modular aufgebaut. Auf einer Welle 23, die in dem figürlichen Ausführungsbeispiel als eine hohle (Hohlwelle) Keilwelle mit einem Wellenhohlraum 36 ausgeführt ist und außenseitig insgesamt sechs radial umlaufend gleich verteilt angeordnete Keile 29 aufweist, sind zwei Walzenpakete 22.1, 22.2 aufgeschoben sowie ein axial zwischen den Walzenpaketen 22.1, 22.2 angeordnetes Schneckenrad 21.

Stirnseitig ist die Welle 23 jeweils mit einer in den Wellenhohlraum 36 einragenden Anlaufbuchse 34.1, 34.2 verschlossen. Die Anlaufbuchsen 34.1, 34.2 bilden insofern den stirnseitigen Abschluss für die Entschwartungswalzen-Baugruppe 20 und bilden für diese ein Rotationslager bei Montage in der Entschwartungsvorrichtung 1. Hierfür weisen die Anlaufbuchsen 34.1, 34.2 jeweils eine Lagerbohrung 35.1, 35.2 auf, in welche die Gelenkschrauben 13.1, 13.2 beziehungsweise ein Lagerzapfen der Entschwartungsvorrichtung 1 eingreifen.

Die Walzenpakete 22.1, 22.2 sind hier analog ausgeführt und weisen jeweils insgesamt sieben Distanzringe 25 und insgesamt sechs Zahnkränze 24 auf. Die Zahnkränze 24 und die Distanzringe 25 sind hier als Gleichteile ausgeführt.

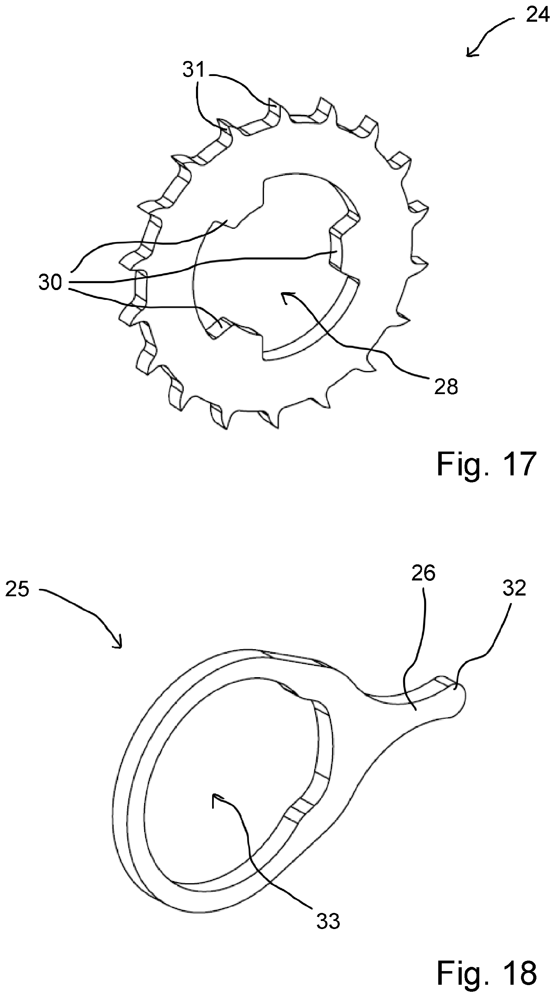

Die Distanzringe 25 sind jeweils über einen Gleitlagerring 27 rotierbar zu der Welle 23 auf ebendieser aufgenommen. Fig. 18 zeigt einen Distanzring 25 in einer Einzelansicht. Dieser weist einen tropfenförmigen Querschnitt auf mit einem im Wesentlichen ringförmigen Grundabschnitt, in welchem eine Ringöffnung 33 mit einer Ausklinkung zum formschlüssigen Aufschieben auf die Keile 29 der Welle 23 vorgesehen ist, und mit einem von dem Grundabschnitt radial abragenden Stegabschnitt 26. Der Stegabschnitt 26 weist an seinem freien, abragenden Ende eine im Querschnitt aufgeweitete Abstreifernase 32 auf. Die gesamte äußere Umlauffläche des Distanzrings 25 ist frei von Kanten und weist jeweils Radien beziehungsweise gekrümmte, runde ineinander übergehende Flächenabschnitte auf.

Eine Einzelansicht eines Zahnkranzes 25 ist in der Fig. 17 angegeben. Dieser weist eine scheibenförmige Grundform auf mit einer innenliegenden Nabenöffnung 28 mit insgesamt drei hervorstehenden Mitnehmernasen 30 zum formschlüssigen Aufschieben auf die Keile 29 der Welle 23 und mit insgesamt achtzehn an einer äußeren, im Querschnitt kreisförmigen Umlauffläche radial gleich verteilt angeordneten Zähnen 31. Die Zähne 31 stehen radial gegenüber den Distanzringen 25 hervor. Zudem sind die Zähne 31 leicht gekrümmt, sodass sie sich bei Rotation um die Walzenachse W in einer bevorzugten Drehrichtung besser in das zu bearbeitende Schneidgut beziehungsweise Fleischstück einkrallen können.

Die Erfindung ist nicht auf das figürlich dargestellte Ausführungsbeispiel der Entschwartungsvorrichtung beziehungsweise der Entschwartungswalzen-Baugruppe beschränkt. Die Komponenten sind grundsätzlich hinsichtlich Ihrer Form, Dimensionierung, Anordnung zueinander und Materialauswahl in weiten Grenzen frei wählbar.

Gleiche Bauteile und Bauteilfunktionen sind durch gleiche Bezugszeichen gekennzeichnet.

### Bezugszeichenliste

- 1: Entschwartungsvorrichtung
- 2: Messerhalter
- 3: Messer
- 4.1: erster Messerschenkel
- 4.2: zweiter Messerschenkel
- 5: Gehäuse
- 6: Grundkörper
- 7.1: erster Schenkel
- 7.2: zweiter Schenkel
- 7.3: Verbindungsabschnitt
- 7.4: Deckabschnitt
- 8.1: erste Verstellöffnung
- 8.2: zweite Verstellöffnung
- 9.1: erste Schenkelfeder
- 9.2: zweite Schenkelfeder
- 10: Rastbolzen
- 11.1: erste Führungsöffnung
- 11.2: zweite Führungsöffnung
- 12: Federbolzen
- 13.1: erste Gelenkschraube
- 13.2: zweite Gelenkschraube
- 14.1: erste Verstellschraube
- 14.2: zweite Verstellschraube
- 15: Aufhängung
- 16: Antriebsschnecke
- 17: Handgriff
- 18.1: erste Halteschraube
- 18.2: zweite Halteschraube
- 19: Gegenmutter
- 20: Entschwartungswalzen-Baugruppe
- 21: Schneckenrad
- 22.1: erstes Walzenpaket
- 22.2: zweites Walzenpaket
- 23: Welle
- 24: Zahnkranz
- 25: Distanzring
- 26: Stegabschnitt
- 27: Gleitlagerring
- 28: Nabenöffnung
- 29: Keil
- 30: Mitnehmernase
- 31: Zahn
- 32: Abstreifernase
- 33: Ringöffnung
- 34.1: erste Anlaufbuchse
- 34.2: zweite Anlaufbuchse
- 35.1: erste Lagerbohrung
- 35.2: zweite Lagerbohrung
- 36: Wellenhohlraum
- 37.1: erste Haltenase
- 37.2: zweite Haltenase
- 38: erste Aufnahmetasche
- 39: zweite Aufnahmetasche
- 40: Führungsvorsprung
- 111: Sicherungsfeder
- 112: Sicherungshebel
- 113: Bedienhebel
- 114: Anschlagelement
- 115: Gelenkschraube
- 116: Hebelführung
- 117: Haltearm
- 118: Halterung
- 119: Arretiernase
- 120: Kupplungsfeder
- 121: Lager
- 122: Kupplungszapfen
- 123: Handgriffhohlraum
- 124: Kupplungshülse
- D: Drehachse
- W: Walzenachse

## Patentansprüche

1. Entschwartungswalzen-Baugruppe (20) für eine Entschwartungsvorrichtung (1) umfassend eine Welle (23) und umfassend ein auf der Welle (23) aufgenommenes Schneckenrad (21) und wenigstens ein axial neben dem Schneckenrad (21) auf der Welle (23) aufgenommenes Walzenpaket (22.1, 22.2) mit einer Vielzahl an axial voneinander beabstandeten und radial kranzförmig verteilt angeordneten Zähnen (31), **dadurch gekennzeichnet, dass** das Walzenpaket (22.1, 22.2) mehrteilig ausgebildet ist und eine Vielzahl an jeweils einzeln und alternierend auf die Welle (23) aufgeschobenen Zahnkränzen (24) und Distanzringen (25) aufweist.

2. Entschwartungswalzen-Baugruppe (20) nach Anspruch 1, **dadurch gekennzeichnet, dass** die Distanzringe (25) einen radial abragenden Stegabschnitt (26) aufweisen.

3. Entschwartungswalzen-Baugruppe (20) nach Anspruch 2, **dadurch gekennzeichnet, dass** die Distanzringe (25) eine tropfenförmige Querschnittsform aufweisen.

4. Entschwartungswalzen-Baugruppe (20) nach einem der Ansprüche 1 bis 3, **dadurch gekennzeichnet, dass** die Distanzringe (25) jeweils mittels eines auf die Welle (23) aufgeschobenen Gleitlagerrings (27) in Bezug auf die Welle (23) rotierbar gelagert sind.

5. Entschwartungswalzen-Baugruppe (20) nach einem der Ansprüche 1 bis 4, **dadurch gekennzeichnet, dass** das Walzenpaket (22.1, 22.2) eine Vielzahl von n Zahnkränzen (24) und eine Vielzahl von n+1 Distanzringen (25) umfasst.

6. Entschwartungswalzen-Baugruppe (20) nach einem der Ansprüche 1 bis 5, **dadurch gekennzeichnet, dass** die Welle (23) als eine Keilwelle ausgeführt ist und dass die Zahnkränze (24) eine hierzu formkorrespondierende Nabenöffnung (28) aufweisen derart, dass die Keilwelle und die darauf aufgeschobenen Zahnkränze (24) eine Welle-Nabe-Verbindung bilden.

7. Entschwartungswalzen-Baugruppe (20) nach Anspruch 6, **dadurch gekennzeichnet, dass** die Keilwelle insgesamt sechs radial gleich verteilt angeordnete Keile (29) aufweist und/oder dass die Zahnkränze (24) jeweils 18 radial gleich verteilt angeordnete Zähne (31) und im Bereich der Nabenöffnung (28) jeweils drei radial gleich verteilt angeordnete Mitnehmernasen (30) aufweisen.

8. Entschwartungswalzen-Baugruppe (20) nach einem der Ansprüche 1 bis 7, **dadurch gekennzeichnet, dass** zwei analog ausgeführte Walzenpakete (22.1, 22.2) umfasst sind, wobei das Schneckenrad (21) und die Walzenpakete (22.1, 22.2) derart auf die Welle (23) aufgeschoben sind, dass das Schneckenrad (21) axial zwischen den Walzenpaketen (22.1, 22.2) angeordnet ist.

9. Entschwartungswalzen-Baugruppe (20) nach einem der Ansprüche 1 bis 8, **dadurch gekennzeichnet, dass** zum einen die Zahnkränze (24) und zum anderen die Distanzringe (25) jeweils als Gleichteile hergestellt sind.

10. Entschwartungswalzen-Baugruppe (20) nach einem der Ansprüche 1 bis 9, **dadurch gekennzeichnet, dass** die Welle (23) als eine Hohlwelle mit einem zylindrischen Wellenhohlraum (36) ausgeführt ist, wobei die Welle (23) axial stirnseitig zwischen zwei jeweils in den zylindrischen Wellenhohlraum (36) eingreifende Anlaufbuchsen (34.1, 24.2) rotierbar gelagert ist.

11. Entschwartungswalzen-Baugruppe (20) nach einem der Ansprüche 1 bis 10, **dadurch gekennzeichnet, dass** die Zahnkränze (24) und die Distanzringe (25) als lasergeschnittene Blechteile und bevorzugt aus Federstahl hergestellt sind.

12. Entschwartungsvorrichtung (1) umfassend eine Entschwartungswalzen-Baugruppe (20) nach einem der Ansprüche 1 bis **11,** welche motorangetrieben in einem Gehäuse (5) um eine Walzenachse (W) rotierend gehalten ist, weiter umfassend ein in einer Arbeitsstellung mit einem Freispalt parallel zur Walzenachse (W) an dem Gehäuse (5) gehaltenes Messer (3), wobei radial abragende Stegabschnitte (26) von Distanzringen (25) der Entschwartungswalzen-Baugruppe (20) in der Arbeitsstellung an das Gehäuse (5) angelegt sind und einen Abstreifer zum Abstreifen von im Betrieb eingezogenem Schneidgut bilden.

13. Entschwartungsvorrichtung (1) nach Anspruch 12, **dadurch gekennzeichnet, dass** der Freispalt einstellbar ist, indem das Messer (3) in einem zwischen zwei Messerschenkeln (4.1, 4.2) des Gehäuses (5) gehaltenen Messerhalter (2) aufgenommen ist und die Messerschenkel (4.1, 4.2) jeweils eine Verstellöffnung (8.1, 8.2) aufweisen, durch die jeweils eine lösbare und in den Messerhalter (2) eingreifende Verstellschraube (14.1, 14.2) geführt ist, derart, dass zum Verstellen des Freispalts die Verstellschrauben (14.1, 14.2) lösbar und hierdurch der Messerhalter (2) entlang der Verstellöffnungen (8.1, 8.2) verschiebbar und/oder rotierbar ist.

14. Entschwartungsvorrichtung (1) nach Anspruch 12 oder 13, **dadurch gekennzeichnet, dass** das Gehäuse (5) mehrteilig ausgebildet ist und einen bügelförmigen Grundkörper (6) mit zwei die Entschwartungswalzen-Baugruppe (20) stirnseitig umgreifenden Schenkeln (7.1, 7.2) umfasst, wobei die Messerschenkel (4.1, 4.2) um eine parallel und/oder koaxial zur Walzenachse (W) orientierte Drehachse (D) aus der Arbeitsstellung in eine Messerwechselstellung und zurück verschwenkbar an den Schenkeln (7.1, 7.2) des Grundkörpers (6) gehalten sind.

15. Entschwartungsvorrichtung (1) nach Anspruch 14, **dadurch gekennzeichnet, dass** zwischen den Schenkeln (7.1, 7.2) des Grundkörpers (6) ein parallel zur Walzenachse (W) orientierter, federbelasteter Rastbolzen (10) gehalten ist, wobei der Rastbolzen (10) aus einer Arretierstellung, in welcher die Messerschenkel (4.1, 4.2) in der Arbeitsstellung gehalten sind, in eine Freigabestellung, in welcher die Messerschenkel (4.1, 4.2) in die Messerwechselstellung verschwenkbar sind, und zurück verbringbar ist.

16. Entschwartungsvorrichtung (1) nach Anspruch 15, **dadurch gekennzeichnet, dass** der Rastbolzen (10) durch in den Schenkeln (7.1, 7.2) vorgesehenen Führungsöffnungen (11.1, 11.2) jeweils endseitig hindurchragend geführt ist, wobei in der Arretierstellung der Rastbolzen (10) in einer ersten Aufnahmetasche (38) der Führungsöffnungen (11.1, 11.2) aufgenommen ist und die Messerschenkel (4.1, 4.2) daran angelegt sind und wobei in der Freigabestellung der Rastbolzen (10) soweit radial beabstandet zu den Messerschenkeln (4.1, 4.2) positioniert ist, dass die Messerschenkel (4.1, 4.2) aus der Arbeitsstellung in die Messerwechselstellung verschwenkbar sind.

17. Entschwartungsvorrichtung (1) nach Anspruch 16, **dadurch gekennzeichnet, dass** die Führungsöffnungen (11.1, 11.2) jeweils eine zu der ersten Aufnahmetasche (38) beabstandete zweite Aufnahmetasche (39) aufweisen, in welcher der Rastbolzen (10) in der Freigabestellung aufnehmbar ist, wobei zwischen der ersten Aufnahmetasche (38) und der zweiten Aufnahmetasche (39) der Führungsöffnungen (11.1, 11.2) ein Führungsvorsprung (40) gebildet ist.

18. Entschwartungsvorrichtung (1) nach Anspruch 17, **dadurch gekennzeichnet, dass** der Rastbolzen (10) über wenigstens eine Torsionsfeder (9.1, 9.2) federbelastet ist, wobei die Torsionsfeder (9.1, 9.2) eine Federkraft aufbringt, welche den Rastbolzen (10) in der Arretierstellung in den ersten Aufnahmetaschen (38) und in der Freigabestellung in den zweiten Aufnahmetaschen (39) der Führungsöffnungen (11.1, 11.2) als Ruhestellungen hält, wobei zum Verbringen des Rastbolzens (10) aus der Arretierstellung in die Freigabestellung oder zurück von einem Bediener eine der Federkraft entgegengerichtete Handkraft aufzubringen ist und wobei zur dabei erforderlichen Überwindung des Führungsvorsprungs (40) der Rastbolzen (10) wenigstens eine Durchgangsöffnung aufweist, in der ein Federschenkel der wenigstens einen Torsionsfeder (9.1, 9.2) längsverschiebbar geführt ist.
